# EUROPÄISCHE PATENTSCHRIFT

(11) **EP 3 945 765 B1**
(45) Veröffentlichungstag und Bekanntmachung des Hinweises auf die Patenterteilung: **15.03.2023**
(21) Anmeldenummer: 20712256.5
(22) Anmeldetag: 12.03.2020
(51) Int. Cl.: A01B 69/04, G05D 1/00, G05D 1/02

(54) **VERFAHREN UND STEUERSYSTEM ZUM STEUERN EINES LANDWIRTSCHAFTLICHEN FAHRZEUGS**
METHOD AND CONTROL SYSTEM FOR CONTROLLING AN AGRICULTURAL VEHICLE
PROCÉDÉ ET SYSTÈME DE CONTRÔLE POUR LA COMMANDE D'UN VÉHICULE AGRICOLE

(30) Priorität: 27.03.2019 DE 102019204241
(43) Veröffentlichungstag der Anmeldung: 09.02.2022
(73) Patentinhaber: ZF Friedrichshafen AG, 88046 Friedrichshafen (DE)
(72) Erfinder: IKONEN, Tommy, 88045 Friedrichshafen (DE); ARAVA, Muralidhar, 88045 Friedrichshafen (DE)
(74) Vertreter: ZF Friedrichshafen AG
(86) Internationale Anmeldenummer: PCT/EP2020/056606
(87) Internationale Veröffentlichungsnummer: WO 2020/193153

(56) Entgegenhaltungen:
- EP-A1- 3 101 503
- DE-A1-102016 121 523
- US-A1- 2005 197 766
- US-A1- 2016 340 867
- US-A1- 2018 267 553

## Beschreibung

Die Erfindung betrifft ein Verfahren zum Steuern eines landwirtschaftlichen Fahrzeugs auf einer landwirtschaftlichen Nutzfläche. Die Erfindung betrifft zudem ein Steuersystem mit einer Steuereinrichtung zum Durchführen von Schritten eines derartigen Verfahrens. Die Erfindung betrifft auch ein landwirtschaftliches Fahrzeug mit einem derartigen Steuersystem.

Es ist bekannt, dass landwirtschaftliche Fahrzeuge eine landwirtschaftliche Nutzfläche automatisiert abfahren können. Ferner sind in der Landmaschinentechnik Assistenzsysteme für landwirtschaftliche Fahrzeuge bekannt, welche das landwirtschaftliche Fahrzeug beim Abfahren der landwirtschaftlichen Nutzfläche steuern können. Die Druckschrift EP 3 101 503 A1 offenbart eine beispielhafte Bestimmung eines Pfads für ein landwirtschaftliches Fahrzeug.

Die Erfindung bezieht sich in einem Aspekt auf ein Verfahren zum Steuern eines landwirtschaftlichen Fahrzeugs auf einer landwirtschaftlichen Nutzfläche.

Das Steuern des landwirtschaftlichen Fahrzeugs auf der landwirtschaftlichen Nutzfläche kann eine Spurführung des landwirtschaftlichen Fahrzeugs aufweisen. Die Spurführung des landwirtschaftlichen Fahrzeugs kann ein Folgen beziehungsweise Abfahren von einer Fahrspur oder einer Trajektorie mit dem landwirtschaftlichen Fahrzeug aufweisen oder darauf basieren. Bei der Fahrspur kann es sich um eine vorbestimmte Fahrspur handeln. Bei der Trajektorie kann es sich um eine vorbestimmte Trajektorie handeln. Die Trajektorie oder die Fahrspur kann koordinatenmäßig, beispielsweise mit GNSS-Koordinaten, vorbestimmt sein. Das landwirtschaftliche Fahrzeug kann entlang der Fahrspur oder der Trajektorie automatisiert geführt beziehungsweise gesteuert werden. Für das Steuern des landwirtschaftlichen Fahrzeugs kann beispielsweise ein lateraler Abstand beziehungsweise ein Versatz zur Fahrspur beziehungsweise zur Trajektorie bestimmt und korrigiert werden. Alternativ dazu kann ein derartiger Versatz bei einer Spurführung derart berücksichtigt werden, dass die Fahrspur oder Trajektorie versetzt abgefahren wird. Für das Steuern des landwirtschaftlichen Fahrzeugs kann auch beispielsweise eine Orientierungsabweichung des landwirtschaftlichen Fahrzeugs zur Fahrspur oder zur Trajektorie bestimmt und korrigiert werden. Das landwirtschaftliche Fahrzeug kann so in vorteilhafter Weise automatisch auf der landwirtschaftlichen Nutzfläche gesteuert werden. Bei dem Steuern des landwirtschaftlichen Fahrzeugs auf der landwirtschaftlichen Nutzfläche ist es somit nicht erforderlich, dass das landwirtschaftliche Fahrzeug aktiv von einem Fahrer gesteuert wird.

Das Steuern des landwirtschaftlichen Fahrzeugs auf der landwirtschaftlichen Nutzfläche kann ein Steuern der Fahrdynamik des landwirtschaftlichen Fahrzeugs aufweisen. Das Steuern der Fahrdynamik kann ein Steuern der Querdynamik des landwirtschaftlichen Fahrzeugs aufweisen. Alternativ oder zusätzlich kann das Steuern des landwirtschaftlichen Fahrzeugs ein Steuern der Längsdynamik des landwirtschaftlichen Fahrzeugs aufweisen. Das Steuern des landwirtschaftlichen Fahrzeugs kann ein Lenken des landwirtschaftlichen Fahrzeugs auf der landwirtschaftlichen Nutzfläche aufweisen. Dabei kann das landwirtschaftliche Fahrzeug querdynamisch gesteuert werden. Das Steuern des landwirtschaftlichen Fahrzeugs kann ein Beschleunigen beziehungsweise Antreiben des landwirtschaftlichen Fahrzeugs auf der landwirtschaftlichen Nutzfläche aufweisen. Dabei kann das landwirtschaftliche Fahrzeug längsdynamisch gesteuert werden.

Bei dem landwirtschaftlichen Fahrzeug kann es sich um eine landwirtschaftliche oder forstwirtschaftliche Maschine, ein landwirtschaftliches oder forstwirtschaftliches Gerät oder ein landwirtschaftliches oder forstwirtschaftliches Nutzfahrzeug handeln. Es kann sich bei dem landwirtschaftlichen Fahrzeug um ein landwirtschaftliches Zugfahrzeug handeln, beispielsweise um einen Traktor. Es kann sich bei dem landwirtschaftlichen Fahrzeug auch um ein landwirtschaftliches Arbeitsfahrzeug handeln, beispielsweise um eine Erntemaschine. Bei der landwirtschaftlichen Nutzfläche kann es sich um eine zu bewirtschaftende landwirtschaftliche oder forstwirtschaftliche Fläche handeln. Beispielsweise kann die landwirtschaftliche Nutzfläche ein Acker, ein Feld mit angepflanzten oder abgeernteten Nutzpflanzen, eine Wiese oder einen Wald aufweisen.

Das Verfahren weist als einen Schritt ein Bestimmen von einem in Fahrtrichtung des landwirtschaftlichen Fahrzeugs vorausliegenden Abschnitt eines Pfads zum Abfahren der landwirtschaftlichen Nutzfläche auf. Der Abschnitt des Pfads wird in Abhängigkeit von einer Fahrtgeschwindigkeit des landwirtschaftlichen Fahrzeugs bis zu einer vorauseilenden Entfernung entlang des Pfads bestimmt. Die Entfernung wird dabei in Abhängigkeit der Fahrtgeschwindigkeit bestimmt. Bei dem Pfad kann es sich um die Fahrspur oder um die Trajektorie handeln.

Bei der Fahrtgeschwindigkeit des landwirtschaftlichen Fahrzeugs kann es sich um eine aktuelle Fahrtgeschwindigkeit des landwirtschaftlichen Fahrzeugs handeln. Alternativ dazu kann es sich bei der Fahrtgeschwindigkeit des landwirtschaftlichen Fahrzeugs um eine zukünftige Fahrtgeschwindigkeit bei einem Abfahren des vorausliegenden Abschnitts des Pfads handeln. Bei der zukünftigen Fahrtgeschwindigkeit kann es sich um eine bei dem Abfahren des Abschnitts des Pfads konstante oder sich ändernde Fahrtgeschwindigkeit handeln.

Die vorauseilende Entfernung entlang des Pfads kann in Abhängigkeit von der Fahrtgeschwindigkeit des landwirtschaftlichen Fahrzeugs definiert werden. Die vorauseilende Entfernung kann proportional zu der Fahrtgeschwindigkeit des landwirtschaftlichen Fahrzeugs definiert werden. Je größer die Fahrtgeschwindigkeit des landwirtschaftlichen Fahrzeugs, desto größer kann die vorauseilende Entfernung entlang des Pfads sein. Desto kleiner die Fahrtgeschwindigkeit des landwirtschaftlichen Fahrzeugs, desto kleiner kann die vorauseilende Entfernung entlang des Pfads sein.

Das Verfahren weist als einen weiteren Schritt ein Kommunizieren von geometrischer Information zu dem bestimmten Abschnitt des Pfads an eine Steuereinrichtung zum Steuern des landwirtschaftlichen Fahrzeugs entlang des Pfads auf. Die geometrische Information wird von einem auf dem landwirtschaftlichen Fahrzeug mitführbaren mobilen Endgerät über eine Endgerät-Fahrzeug-Schnittstelle an die Steuereinrichtung kommuniziert. Die geometrische Information kann von der Steuereinrichtung angefordert werden. Alternativ dazu kann die geometrische Information als Steuerbefehl von dem mobilen Endgerät beziehungsweise von einem Bediener des mobilen Endgeräts an die Steuereinrichtung übertragen beziehungsweise gesendet werden, um das landwirtschaftliche Fahrzeug anzusteuern.

Das Kommunizieren von geometrischer Information zu dem bestimmten Abschnitt des Pfads kann mindestens eines von einem Ausgeben, einem Übertragen und einem Einlesen von geometrischer Information zu dem bestimmten Abschnitt des Pfads aufweisen. Das Kommunizieren kann ein Ausgeben von geometrischer Information von dem mobilen Endgerät über eine Ausgabeschnittstelle des mobilen Endgeräts aufweisen. Alternativ oder zusätzlich kann das Kommunizieren von geometrischer Information ein Übertragen von geometrischer Information von dem mobilen Endgerät über die Endgerät-Fahrzeug-Schnittstelle an die Steuereinrichtung aufweisen. Alternativ oder zusätzlich kann das Kommunizieren von geometrischer Information ein Einlesen von geometrischer Information durch die Steuereinrichtung über eine Einleseschnittstelle der Steuereinrichtung aufweisen. Die geometrische Information kann mindestens einen Punkt bezüglich des bestimmten Abschnitts des Pfads aufweisen. Der mindestens eine Punkt kann auf dem Pfad entlang des bestimmten Abschnitts liegen. Alternativ oder zusätzlich kann die geometrische Information mindestens ein geometrisches Element bezüglich des bestimmten Abschnitts des Pfads aufweisen.

Bei der geometrischen Information zu dem bestimmten Abschnitt des Pfads kann es sich um Wegpunktinformation entlang des Pfads handeln, welche zumindest teilweise entlang des bestimmten Abschnitts des Pfads angeordnet sein kann. Die Wegpunktinformation kann einen einzelnen oder eine Vielzahl von Wegpunkten aufweisen. Die Vielzahl von Wegpunkten kann mindestens zwei Wegpunkte aufweisen. Bei den Wegpunkten kann es sich um äquidistant angeordnete Wegpunkte handeln. Alternativ oder zusätzlich kann es sich bei den Wegpunkten um Wegpunkte mit einem krümmungsbasierten Punktabstand handeln. So können beispielsweise in einem kreisbogenförmigen Abschnitt des Pfads Wegpunkte mit einem Punktabstand angeordnet sein, welcher kleiner ist als ein Punktabstand von in einem geradlinigen Abschnitt des Pfads angeordneten Wegpunkten. Die Wegpunktinformation kann in einem Koordinatensystem vorliegen. Bei dem Koordinatensystem kann es sich um ein fahrzeugbezogenes oder um nutzflächenbezogenes Koordinatensystem handeln.

Bei der geometrischen Information kann es sich um eine geometrische Abstraktion von dem bestimmten Abschnitt des Pfads handeln. Bei der geometrischen Abstraktion von dem Abschnitt des Pfads kann es sich um eine Auswahl von Wegpunktinformation entlang des Pfads handeln. Bei der geometrischen Abstraktion von dem vorausliegenden Abschnitt des Pfads kann es sich ferner um eine geometrische Vereinfachung beziehungsweise Parametrisierung der Wegpunktinformation handeln. Alternativ oder zusätzlich kann es sich bei der geometrischen Abstraktion von dem Abschnitt des Pfads um eine mathematische beziehungsweise geometrische Funktion oder Kurve zur Approximation der Wegpunktinformation beziehungsweise des Abschnitts des Pfads handeln. Die Wegpunktinformation kann hierfür mathematische Stützpunkte aufweisen. Alternativ oder zusätzlich kann es sich bei der geometrischen Abstraktion von dem Abschnitt des Pfads um ein Trassierungselement beziehungsweise um einen Trassierungsparameter handeln, welche jeweils auf der Wegpunktinformation basieren können.

Bei dem mobilen Endgerät kann es sich beispielsweise um ein Mobiltelefon, ein Smartphone oder um ein Tablet handeln. Es kann sich bei dem mobilen Endgerät um ein mobiles Steuergerät zum Steuern des landwirtschaftlichen Fahrzeugs handeln. Ferner kann es sich bei dem mobilen Endgerät um ein unterhaltungselektronisches Gerät beziehungsweise um ein sogenanntes "unsicheres Endgerät" handeln. Das mobile Endgerät kann ein bezüglich des landwirtschaftlichen Fahrzeugs segregiertes, das heißt ein nicht in das landwirtschaftliche Fahrzeug integriertes, Gerät sein. Bei dem mitführbaren mobilen Endgerät kann es sich somit um ein mit dem landwirtschaftlichen Fahrzeug mitfahrendes mobiles Endgerät, jedoch ein mit dem landwirtschaftlichen Fahrzeug nicht dauerhaft oder fest verbundenes mobiles Endgerät, handeln.

Die Endgerät-Fahrzeug-Schnittstelle kann eine drahtlose oder eine drahtgebundene (Endgerät-Fahrzeug-)Schnittstelle sein. Bei der Endgerät-Fahrzeug-Schnittstelle kann es sich um eine funkbasierte oder um eine kabelbasierte Schnittstelle handeln. Handelt es sich bei der Endgerät-Fahrzeug-Schnittstelle um eine drahtlose beziehungsweise um eine funkbasierte Schnittstelle, kann diese eine Mobilfunk-Schnittstelle, eine WLAN-Schnittstelle, eine Bluetooth-Schnittstelle oder eine IrDA-Schnittstelle sein. Handelt es sich bei der Endgerät-Fahrzeug-Schnittstelle um eine drahtgebundene, leitergebundene beziehungsweise kabelbasierte Schnittstelle, kann diese eine USB-Schnittstelle oder eine serielle Schnittstelle sein. Die Endgerät-Fahrzeug-Schnittstelle kann ferner einen Adapter zum Aufnehmen des mobilen Endgeräts auf dem landwirtschaftlichen Fahrzeug aufweisen. Die Endgerät-Fahrzeug-Schnittstelle kann ferner einen Stecker aufweisen, mit welchem das mobile Endgerät mit der Steuereinrichtung verbunden werden kann. Mit dem Adapter oder dem Stecker kann das mobile Endgerät temporär verbunden auf dem landwirtschaftlichen Fahrzeug mitgeführt werden.

Das mobile Endgerät kann neben der Endgerät-Fahrzeug-Schnittstelle, welche als eine Kommunikations-Schnittstelle des mobilen Endgeräts eingerichtet sein kann, mindestens eine weitere Schnittstelle aufweisen. Das mobile Endgerät kann als eine weitere Schnittstelle eine Benutzungs-Schnittstelle aufweisen. Bei der Benutzungs-Schnittstelle kann es sich um eine LCD-Schnittstelle, ein Touchdisplay, eine Tastatur oder eine Audio-Schnittstelle handeln. Über die Benutzungs-Schnittstelle kann ein Bediener des landwirtschaftlichen Fahrzeugs einen entsprechenden Kommunikationsbefehl beziehungsweise einen entsprechenden Steuerbefehl an die Steuereinrichtung des landwirtschaftlichen Fahrzeugs senden. Mit dem Kommunikationsbefehl kann das Kommunizieren der geometrischen Information veranlasst werden. Bei dem Bediener kann es sich um einen Fahrer des landwirtschaftlichen Fahrzeugs handeln. Das mobile Endgerät kann als eine weitere Schnittstelle eine Speicher-Schnittstelle zum Einlesen des Pfads zum Abfahren der landwirtschaftlichen Nutzfläche aufweisen. Über die Speicher-Schnittstelle kann ein Pfad, welcher auf einem auf dem landwirtschaftlichen Fahrzeug nicht mitführbaren Gerät geplant worden ist, auf eine Speichereinheit des mobilen Endgeräts übertragen werden.

Das Verfahren weist als einen weiteren Schritt einen Prüfschritt auf. In dem Prüfschritt wird geprüft, ob ein Abfahren des vorausliegenden Abschnitts unter Berücksichtigung der kommunizierten geometrischen Information und der Fahrtgeschwindigkeit des landwirtschaftlichen Fahrzeugs einen fahrdynamischen Einfluss auf die Fahrdynamik des landwirtschaftlichen Fahrzeugs hat, welcher einen vordefinierten fahrdynamischen Grenzwert überschreitet.

Die Fahrdynamik des landwirtschaftlichen Fahrzeugs kann mindestens eines von einer Querdynamik des landwirtschaftlichen Fahrzeugs und einer Längsdynamik des landwirtschaftlichen Fahrzeugs aufweisen. Der fahrdynamische Einfluss kann somit zumindest eines von einem querdynamischen Einfluss und einem längsdynamischen Einfluss aufweisen. Bei dem Abfahren des vorausliegenden Abschnitts kann als ein fahrdynamischer Einfluss mindestens eines von einer Kraft, einem Moment, einer Geschwindigkeit und einer Beschleunigung auf das landwirtschaftliche Fahrzeug wirken. Die auf das Fahrzeug wirkende Kraft kann mindestens eines von einer Querkraft und einer Längskraft aufweisen. Das Moment kann beispielsweise ein Kippmoment des landwirtschaftlichen Fahrzeugs sein, welches bei einer Fahrt entlang eines gekrümmten Abschnitts des Pfads auftreten kann. Bei dem vordefinierten fahrdynamischen Grenzwert kann es sich um einen, den beschriebenen fahrdynamischen Einflüssen entsprechenden, Grenzwert handeln. Beispielsweise kann es sich bei dem Grenzwert um einen Kraftgrenzwert, einen Momentgrenzwert, einen Geschwindigkeitsgrenzwert oder einen Beschleunigungsgrenzwert handeln.

Der Prüfschritt kann verschiedene Prüfergebnisse aufweisen. Als ein Prüfergebnis kann festgestellt werden, dass das Abfahren des vorausliegenden Abschnitts unter Berücksichtigung der kommunizierten geometrischen Information und der Fahrtgeschwindigkeit des landwirtschaftlichen Fahrzeugs einen fahrdynamischen Einfluss auf die Fahrdynamik des landwirtschaftlichen Fahrzeugs hat, welcher den vordefinierten fahrdynamischen Grenzwert überschreitet. Als ein weiteres Prüfergebnis kann festgestellt werden, dass ein Abfahren des vorausliegenden Abschnitts unter Berücksichtigung der kommunizierten geometrischen Information und der Fahrtgeschwindigkeit des landwirtschaftlichen Fahrzeugs einen fahrdynamischen Einfluss auf die Fahrdynamik des landwirtschaftlichen Fahrzeugs hat, welcher einen vordefinierten fahrdynamischen Grenzwert nicht überschreitet. Noch ein weiteres Prüfergebnis des Prüfschritts kann sein, dass das Abfahren des vorausliegenden Abschnitts unter Berücksichtigung der kommunizierten geometrischen Information und der Fahrtgeschwindigkeit des Fahrzeugs keinen für einen der beschriebenen fahrdynamischen Einflüsse relevanten Einfluss auf die Fahrdynamik des landwirtschaftlichen Fahrzeugs hat.

Das Verfahren weist als einen weiteren Schritt ein Ansteuern von zumindest einer Fahrdynamikkomponente des landwirtschaftlichen Fahrzeugs in Abhängigkeit von einem Prüfergebnis des Schritts des Prüfens auf. Das Prüfergebnis kann eines der beschriebenen Prüfergebnisse sein.

Die zumindest eine Fahrdynamikkomponente kann mindestens eines von einer Querdynamikkomponente und einer Längsdynamikkomponente des landwirtschaftlichen Fahrzeugs aufweisen. Die Fahrdynamikkomponente kann ferner eine Komponente eines Antriebsstrangs des landwirtschaftlichen Fahrzeugs aufweisen. Beispielsweise kann es sich bei der Fahrdynamikkomponente um eine Lenkung des landwirtschaftlichen Fahrzeugs beziehungsweise um ein Bauteil derselben oder um einen Antrieb des landwirtschaftlichen Fahrzeugs beziehungsweise um ein Bauteil desselben handeln. Bei der Fahrdynamikkomponente kann es sich auch um eine weitere Steuerung des landwirtschaftlichen Fahrzeugs, beispielsweise um eine Lenkungssteuerung oder um eine Antriebssteuerung, handeln.

Im Rahmen der Erfindung kann unter Berücksichtigung von geometrischer Information zu einem abzufahrenden Pfad und einer Fahrtgeschwindigkeit des landwirtschaftlichen Fahrzeugs entlang dem abzufahrenden Pfad ein fahrdynamisches Sicherheitsrisiko geprüft werden. Überschreitet der fahrdynamische Einfluss auf die Fahrdynamik des landwirtschaftlichen Fahrzeugs einen vordefinierten fahrdynamischen Sicherheitsgrenzwert, kann das Abfahren des vorausliegenden Abschnitts des abzufahrenden Pfads ein Sicherheitsrisiko aufweisen. Ein derartiges Sicherheitsrisiko kann mit der Erfindung in vorteilhafter Weise reduziert werden.

Der Prüfschritt kann ein Überprüfen, ob ein fahrdynamisches Sicherheitsrisiko für das landwirtschaftliche Fahrzeug beziehungsweise dessen Fahrer beim Befahren des vorausliegenden Abschnitts vorhanden ist, aufweisen. Der Prüfschritt kann ferner ein Plausibilisieren des abzufahrenden vorausliegenden Abschnitts aufweisen. Es kann geprüft werden, ob eine Geometrie des abzufahrenden Abschnitts des Pfads mit der Fahrtgeschwindigkeit des landwirtschaftlichen Fahrzeugs abgefahren werden kann, ohne dass das Abfahren einen Schaden am Fahrzeug beziehungsweise am Fahrer verursacht. Mit der Erfindung kann daher ein unsicheres fahrdynamisches Verhalten des landwirtschaftlichen Fahrzeugs beim Abfahren eines Pfads in vorteilhafter Weise präventiv vermieden werden. Ein automatisierter Betrieb des landwirtschaftlichen Fahrzeugs auf der landwirtschaftlichen Nutzfläche kann somit mit der Erfindung sicherer ausgeführt werden.

Mindestens einer der Schritte des Verfahrens kann automatisiert ausgeführt werden. Das landwirtschaftliche Fahrzeug kann so zumindest teilweise automatisiert gesteuert werden. Alternativ oder zusätzlich kann mindestens einer der Schritte des Verfahrens während einem Steuern des landwirtschaftlichen Fahrzeugs auf der landwirtschaftlichen Nutzfläche kontinuierlich ausgeführt werden. Die Schritte des Verfahrens können ferner in einer Schleife zum kontinuierlichen Ausführen des Verfahrens durchgeführt werden. Ein Fahrer des landwirtschaftlichen Fahrzeugs kann mindestens einen der Schritte überwachen, überprüfen oder bestätigen.

In einer Ausführungsform des Verfahrens wird in dem Schritt des Bestimmens der vorausliegende Abschnitt des Pfads zudem ab einer weiteren vorauseilenden Entfernung vom landwirtschaftlichen Fahrzeug entlang des Pfads bestimmt. Der vorausliegende Abschnitt kann so zwischen den beiden vorauseilenden Entfernungen bestimmt werden. Der vorausliegende Abschnitt kann so von der weiteren vorauseilenden Entfernung bis zu der vorauseilenden Entfernung bestimmt werden. Der vorausliegende Abschnitt des Pfads kann in Fahrtrichtung des landwirtschaftlichen Fahrzeugs zu diesem beabstandet entlang des Pfads bestimmt werden. Der bestimmte vorausliegende Abschnitt kann einen zukünftig von dem landwirtschaftlichen Fahrzeug zu befahrenden Abschnitt definieren. Der bestimmte vorausliegende Abschnitt kann einen Vorausschaubereich entlang des Pfads aufspannen, wobei die weitere vorauseilende Entfernung einen Vorausschauhorizont und die vorauseilende Entfernung eine Vorausschaugrenze definieren können.

Eine weitere Ausführungsform des Verfahrens weist als einen weiteren Schritt ein Kommunizieren von einem Fahrtgeschwindigkeitsverlauf entlang des bestimmten Abschnitts des Pfads auf. Das Verfahren kann als einen weiteren Schritt ein Bestimmen des Fahrtgeschwindigkeitsverlaufs bezogen auf den vorausliegenden Abschnitt des Pfads aufweisen. Der Fahrtgeschwindigkeitsverlauf kann in Abhängigkeit der Fahrgeschwindigkeit bestimmt und kommuniziert werden. Gemäß dieser Ausführungsform kann der Schritt des Prüfens zudem unter Berücksichtigung des kommunizierten Fahrtgeschwindigkeitsverlaufs durchgeführt werden. Es kann geprüft werden, ob ein Abfahren des vorausliegenden Abschnitts unter Berücksichtigung der kommunizierten geometrischen Information und des kommunizierten Fahrtgeschwindigkeitsverlaufs den fahrdynamischen Einfluss auf die Fahrdynamik des landwirtschaftlichen Fahrzeugs hat, welcher den vordefinierten fahrdynamischen Grenzwert überschreitet.

Der fahrdynamische Einfluss kann basierend auf der geometrischen Information und der Fahrtgeschwindigkeit beziehungsweise dem Fahrtgeschwindigkeitsverlauf abgeleitet werden. Einer der beschriebenen fahrdynamischen Einflüsse kann so basierend auf der geometrischen Information und der Fahrtgeschwindigkeit beziehungsweise dem Fahrtgeschwindigkeitsverlauf berechnet werden. Im Rahmen dieser Ausführungsform kann die geometrische Information somit zusammen mit Metainformation, beispielsweise dem Fahrtgeschwindigkeitsverlauf, von dem mobilen Endgerät über die Endgerät-Fahrzeug-Schnittstelle an die Steuereinrichtung des landwirtschaftlichen Fahrzeugs kommuniziert werden.

Eine weitere Ausführungsform des Verfahrens weist als einen weiteren Schritt ein Berechnen von einer Krümmungsinformation zu dem in Fahrtrichtung des landwirtschaftlichen Fahrzeugs vorausliegenden Abschnitts des Pfads basierend auf der kommunizierten geometrischen Information auf. Der Schritt des Prüfens kann ein Prüfen, ob das Abfahren des vorausliegenden Abschnitts unter Berücksichtigung der berechneten Krümmungsinformation und einer Fahrtgeschwindigkeit des landwirtschaftlichen Fahrzeugs entlang des vorausliegenden Abschnitts den fahrdynamischen Einfluss hat, aufweisen. Die Krümmungsinformation kann eine Krümmung beziehungsweise einen Krümmungsverlauf oder einen Radius eines abzufahrenden Abschnitts des Pfads, beispielsweise eines Kreisbogens, aufweisen. Der Prüfschritt kann so auch unter Berücksichtigung der berechneten Krümmungsinformation und dem kommunizierten Fahrtgeschwindigkeitsverlauf durchgeführt werden.

Bei dem vorausliegenden Abschnitt des Pfads kann es sich um einen gekrümmten Abschnitt des Pfads handeln. Es kann in vorteilhafter Weise ein vorausliegender gekrümmter Abschnitt des Pfads unter Berücksichtigung der Fahrtgeschwindigkeit beziehungsweise des Fahrtgeschwindigkeitsverlaufs daraufhin geprüft werden, ob ein aus der Krümmungsinformation resultierender Lenkwinkel zum Abfahren des Pfads den fahrdynamischen Einfluss hat. Der überprüfte Lenkwinkel zum Befahren des vorausliegenden Abschnitts kann um Ansteuern von der Lenkung des landwirtschaftlichen Fahrzeugs verwendet werden, wenn der aus dem Lenkwinkel resultierende fahrdynamische Einfluss den vordefinierten fahrdynamischen Grenzwert nicht überschreitet. Mit dem Verfahren werden daher Lenkwinkel angesteuert, welche in vorteilhafter Weise einen sicheren Betrieb des landwirtschaftlichen Fahrzeugs zur Folge haben. Alternativ dazu kann auch die Fahrtgeschwindigkeit des landwirtschaftlichen Fahrzeugs zum Befahren des vorausliegenden Abschnitts verringert werden, um den fahrdynamischen Einfluss zu reduzieren, so dass der vordefinierte fahrdynamische Grenzwert nicht überschritten wird.

In einer weiteren Ausführungsform des Verfahrens weist der Schritt des Prüfens ein Prüfen, ob bei dem Abfahren des vorausliegenden Abschnitts eine trägheitsinduzierte Kraft auf das landwirtschaftliche Fahrzeug wirkt, welche eine vordefinierte Kraft überschreitet, auf. Bei der trägheitsinduzierten Kraft kann es sich um eine Fliehkraft beziehungsweise um eine Zentripetalkraft handeln. Bei der vordefinierten Kraft kann es sich um einen entsprechenden vordefinierten Kraftgrenzwert handeln. So kann in vorteilhafter Weise geprüft werden, ob bei einem Abfahren eines vorausliegenden gekrümmten Abschnitts ein Kippmoment auf das landwirtschaftliche Fahrzeug wirkt, welches ein Kippen des landwirtschaftlichen Fahrzeugs zur Folge haben kann. Somit kann mit dem Verfahren ein landwirtschaftliches Fahrzeug beispielsweise entlang einem Vorgewende sicher gesteuert werden, ohne dass das landwirtschaftliche Fahrzeug in dem Vorgewende die Bodenhaftung verliert.

Eine weitere Ausführungsform des Verfahrens weist als weiteren Schritt ein Erfassen von einem Umfeld des landwirtschaftlichen Fahrzeugs zum Erfassen von einem Hindernis entlang des in Fahrtrichtung des landwirtschaftlichen Fahrzeugs vorausliegenden Abschnitts des Pfads mit einer Umfelderfassungssensorik auf. Die Umfelderfassungssensorik kann mindestens einen Umfelderfassungssensor aufweisen. Der mindestens eine Umfelderfassungssensor kann mindestens eines von mindestens einem Laserscanner, mindestens einem Radargerät und mindestens einer Kamera aufweisen. Ein erfasstes Hindernis kann beispielsweise basierend auf Methoden der Mustererkennung oder Bildverarbeitung automatisiert in Messdaten von mindestens einem Sensor der Umfelderfassungssensorik erkannt werden.

Gemäß dieser Ausführungsform kann ein weiterer Prüfschritt durchgeführt werden, wenn ein Hindernis erfasst beziehungsweise erkannt worden ist. In dem weiteren Prüfschritt kann geprüft werden, ob das Abfahren des vorausliegenden Abschnitts unter Berücksichtigung von dem erfassten Hindernis ein Kollisionsrisiko zwischen dem landwirtschaftlichen Fahrzeug und dem erfassten Hindernis aufweist. Befindet sich das Hindernis entlang des abzufahrenden Pfads beziehungsweise entlang des vorausliegenden Abschnitts oder bewegt sich das Hindernis auf dem Pfad beziehungsweise auf den vorausliegenden Abschnitt zu, kann das Kollisionsrisiko vorliegen.

Weist das Abfahren als Prüfergebnis ein Kollisionsrisiko auf, kann als Fahrdynamickomponente beispielsweise die Lenkung, der Antrieb oder eine Bremse des Fahrzeugs angesteuert werden. Das landwirtschaftliche Fahrzeug kann so in vorteilhafter Weise derart angesteuert werden, dass das Hindernis von dem landwirtschaftlichen Fahrzeug umfahren wird oder dass das landwirtschaftliche Fahrzeug vor diesem abbremst. Mit dem weiteren Prüfschritt kann das Verfahren somit eine zweistufige Prüfung auf ein Kollisionsrisiko und ein fahrdynamisches Sicherheitsrisiko aufweisen. Ein automatisierter Betrieb des landwirtschaftlichen Fahrzeugs auf der landwirtschaftlichen Nutzfläche kann so in vorteilhafter Weise effizienter und sicherer sein.

In einer weiteren Ausführungsform des Verfahrens weist der Schritt des weiteren Prüfens ein Prüfen, ob bei dem Abfahren des vorausliegenden Abschnitts eine ausreichende Reaktionszeit für ein Abbremsen des Fahrzeugs vorliegt, auf. Bei der Reaktionszeit kann es sich um eine Reaktionszeit zum Durchführen einer Notbremsung vor einem erfassten Hindernis handeln. Das landwirtschaftliche Fahrzeug kann automatisiert abgebremst werden. Alternativ dazu kann die Bremse beziehungsweise Steuerung des landwirtschaftlichen Fahrzeugs auch an einen Bediener zum bedienergeführten Abbremsen übergeben werden. Somit können in vorteilhafter Weise Schäden an dem Fahrzeug beziehungsweise an dem Hindernis vermieden werden. Bei dem Hindernis kann es sich um ein Bauwerk, eine Geländeerhöhung oder Geländevertiefung auf der landwirtschaftlichen Nutzfläche oder um ein Lebewesen handeln. Auch bei einem Abbruch einer Kommunikation über die Endgerät-Fahrzeug-Schnittstelle kann das landwirtschaftliche Fahrzeug durch den weiteren Prüfschritt noch rechtzeitig vor einem Hindernis abgebremst werden.

Eine weitere Ausführungsform des Verfahrens weist als einen weiteren Schritt ein Puffern der kommunizierten geometrischen Information in einer Speichereinheit der Steuereinrichtung auf. Auch ein kommunizierter Fahrtgeschwindigkeitsverlauf kann derart gepuffert werden. Das Fahrzeug kann sich vor einem Befahren der landwirtschaftlichen Nutzfläche solange im Stillstand befinden, bis geometrische Information zu dem Pfad bis zu dem bestimmten Abschnitt des Pfads kommuniziert und gepuffert worden ist. Die gepufferte geometrische Information kann zum Ansteuern der zumindest einen Fahrdynamikkomponente verwendet werden, wenn diese gemäß mindestens einem der beschriebenen Prüfschritte überprüft worden ist. Das Verfahren kann so in vorteilhafter Weise bereits vor dem Befahren der landwirtschaftlichen Nutzfläche und auch während dem Befahren der landwirtschaftlichen Nutzfläche durchgeführt werden.

Die Erfindung bezieht sich in einem weiteren Aspekt auf ein Steuersystem mit einer Steuereinrichtung und einem mobilen Endgerät zum Durchführen der Schritte des Verfahrens nach dem vorhergehenden Aspekt. Bei der Steuereinrichtung und dem mobilen Endgerät handelt es sich um die beschriebene Steuereinrichtung und das beschriebene mobile Endgerät. Das Steuersystem kann zudem jede weitere zum vorhergehenden Aspekt beschriebene Komponente zum Durchführen des Verfahrens nach dem vorhergehenden Aspekt aufweisen.

Die Erfindung bezieht sich in einem weiteren Aspekt auf ein landwirtschaftliches Fahrzeug mit einem Steuersystem nach dem vorhergehenden Aspekt zum Steuern des landwirtschaftlichen Fahrzeugs auf einer Nutzfläche. Bei dem landwirtschaftlichen Fahrzeug kann es sich um ein automatisiert betreibbares landwirtschaftliches Fahrzeug handeln. Das landwirtschaftliche Fahrzeug kann ferner als ein autonomes landwirtschaftliches Fahrzeug ausgebildet sein.
- Fig. 1: zeigt in einer Draufsicht ein landwirtschaftliches Fahrzeug mit einem Steuersystem nach einer jeweiligen Ausführungsform der Erfindung zur Erläuterung eines Verfahrens zum Steuern des landwirtschaftlichen Fahrzeugs auf einer landwirtschaftlichen Nutzfläche gemäß einer Ausführungsform der Erfindung.
- Fig. 2: zeigt ein Ablaufdiagramm mit Verfahrensschritten zum Durchführen des Verfahrens zum Steuern des landwirtschaftlichen Fahrzeugs auf der landwirtschaftlichen Nutzfläche in einer Ausführungsform der Erfindung.

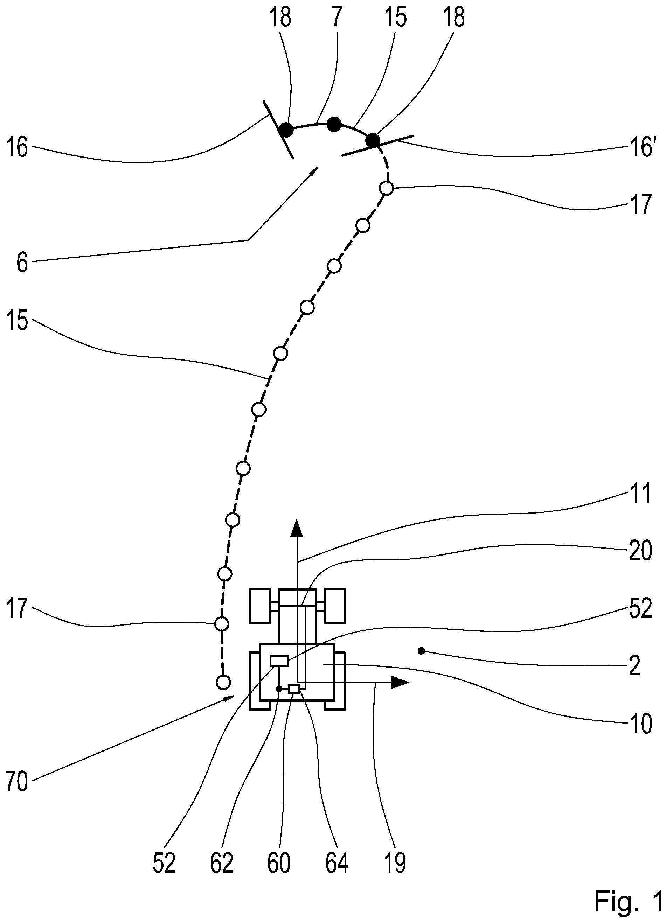

In Fig. 1 ist ein landwirtschaftliches Fahrzeug 10 auf einer landwirtschaftlichen Nutzfläche 2 gezeigt. Das landwirtschaftliche Fahrzeug 10 fährt die landwirtschaftliche Nutzfläche 2 entlang eines Pfads 15 ab, wobei das landwirtschaftliche Fahrzeug 10 in der gezeigten Ausführungsform lateral versetzt zu dem Pfad 15 fährt.

Das landwirtschaftliche Fahrzeug 10 weist ein Steuersystem 70 auf. Das Steuersystem 70 weist eine Steuereinrichtung 60 und ein mobiles Endgerät 52, welche über eine Endgerät-Fahrzeug-Schnittstelle 62 verbunden sind, auf. Das landwirtschaftliche Fahrzeug 10 weist zudem ein Fahrzeugkoordinatensystem 19 auf, dessen Ordinate die Fahrtrichtung 11 des landwirtschaftlichen Fahrzeugs 10 definiert. Die Steuereinrichtung 60 ist zudem über eine Ausgabeschnittstelle 64 mit einer Lenkung 20, in der gezeigten Ausführungsform eine Vorderachslenkung, verbunden, um diese zum Befahren der landwirtschaftlichen Nutzfläche 2 mit dem landwirtschaftlichen Fahrzeug 10 anzusteuern. Über die Ausgabeschnittstelle 64 wird ein entsprechender Steuerbefehl ausgegeben.

Der Pfad 15 weist in einer in Fig. 1 nicht gezeigten Speichereinheit des Steuersystems 70 gepufferte Wegpunkte 17 und aktuell an der Steuereinrichtung 60 über die Endgerät-Fahrzeug-Schnittstelle 62 von dem mobilen Endgerät 52 eingelesene Wegpunkte 18 auf. Die gepufferten Wegpunkte 17 sind bis zu einer ersten vorauseilenden Entfernung 16' entlang des Pfads 15 gespeichert. Die eingelesenen Wegpunkte 18 sind entlang des Pfads 15 ab der ersten vorauseilenden Entfernung 16' bis zu einer zweiten vorauseilenden Entfernung 16 entlang des Pfads 15 eingelesen worden. Zwischen den beiden vorauseilenden Entfernungen 16`, 16 ist ein vorausliegender Abschnitt 6 entlang des Pfads 15 definiert, wobei als eine geometrische Information zu dem vorausliegenden Abschnitt 6 eine Krümmung 7 des vorausliegenden Abschnitts 6 basierend auf den eingelesenen Wegpunkten 18 mit einer in Fig. 1 nicht gezeigten Recheneinheit der Steuereinrichtung 60 berechnet worden ist.

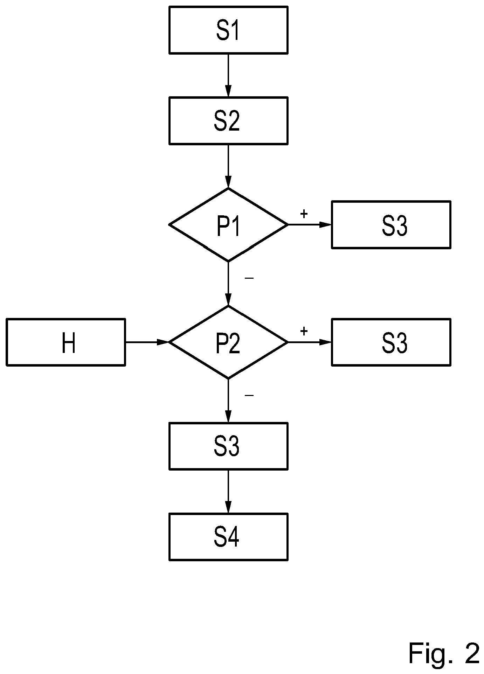

Fig. 2 zeigt ein Ablaufdiagramm mit Verfahrensschritten S1 bis S5. Das Ablaufidagramm weist zudem zwei Prüfschritte P1, P2 auf. Das Ablaufdiagramm weist außerdem einen Erfassungsschritt H auf.

In einem ersten Schritt S1 erfolgt eine Abschnittsbestimmung. In dem ersten Schritt S1 wird der in Fahrtrichtung 11 des landwirtschaftlichen Fahrzeugs 10 vorausliegende Abschnitt 6 des Pfads 15 zum Abfahren der landwirtschaftlichen Nutzfläche 2 ab der ersten vorauseilenden Entfernung 16' bis zur zweiten vorauseilenden Entfernung 16 entlang des Pfads 15 in Abhängigkeit der aktuellen Fahrtgeschwindigkeit des landwirtschaftlichen Fahrzeugs 10 bestimmt.

In einem zweiten Schritt S2 werden Wegpunkte 18 entlang des Abschnitts 6 des Pfads 15 von dem mobilen Endgerät 52 auf dem landwirtschaftlichen Fahrzeug 10 über die Endgerät-Fahrzeug-Schnittstelle 62 an die Steuereinrichtung 60 zum Steuern der Lenkung 20 des landwirtschaftlichen Fahrzeugs 10 übertragen. Die Steuereinrichtung 60 steuert hierfür eine in Fig. 1 nicht gezeigte Lenkungssteuerung der Lenkung 12 an.

Nach den ersten beiden Schritten S1, S2 wird ein erster Prüfschritt P1 durchgeführt. Im ersten Prüfschritt P1 wird geprüft, ob ein Abfahren des Abschnitts 6 mit dem landwirtschaftlichen Fahrzeug 10 mit seiner Krümmung 7, welche basierend auf den Wegpunkten 18 des Abschnitts 6 berechnet worden ist, und der aktuellen Fahrtgeschwindigkeit des landwirtschaftlichen Fahrzeugs 10 ein Kippmoment des landwirtschaftlichen Fahrzeugs 10 zur Folge hat, bei welchem das landwirtschaftliche Fahrzeug 10 die Bodenhaftung verliert. Dabei wird geprüft, ob das Kippmoment ein in Abhängigkeit von Krümmung 7 und Geschwindigkeit des landwirtschaftlichen Fahrzeugs 10 vordefinierten Kippmomentgrenzwert überschreitet.

Liegt ein derartiges Kippmoment vor, welches den vordefinierten Kippmomentgrenzwert überschreitet, erfolgt in einem dritten Schritt S3 eine Fahrdynamikansteuerung des landwirtschaftlichen Fahrzeugs 10. In einer Ausführungsform wird eine in Fig. 1 nicht gezeigte Bremse des landwirtschaftlichen Fahrzeugs 10 angesteuert, um das landwirtschaftliche Fahrzeug 10 abzubremsen und dessen Fahrtgeschwindigkeit zum Befahren des vorausliegenden Abschnitts 6 entlang des Pfads 15 zu verringern.

Überschreitet dagegen das Kippmoment den vordefinierten Kippmomentgrenzwert nicht beziehungsweise wird die Fahrtgeschwindigkeit verringert, wird ein zweiter Prüfschritt P2 durchgeführt.

Vor dem Durchführen des zweiten Prüfschritts P2 erfolgt eine Umfelderfassung H. Im Erfassungsschritt H wird das Umfeld des landwirtschaftlichen Fahrzeugs 10 erfasst. Hält sich ein in Fig. 1 nicht gezeigtes Hindernis im Umfeld des landwirtschaftlichen Fahrzeugs 10 auf der landwirtschaftlichen Nutzfläche 2 auf, wird dieses erfasst. Im zweiten Prüfschritt P2 wird geprüft, ob das erfasste Hindernis ein Kollisionsrisiko mit dem landwirtschaftlichen Fahrzeug 10 beim Abfahren des Pfads 15 darstellt. Liegt ein derartiges Kollisionsrisiko vor, wird in dem dritten Schritt S3 der Fahrdynamikansteuerung die in Fig. 1 nicht gezeigte Bremse des landwirtschaftlichen Fahrzeugs 10 angesteuert, um das landwirtschaftliche Fahrzeug 10 vor dem erfassten Hindernis abzubremsen.

Wird im Erfassungsschritt H kein Hindernis erfasst oder liegt als Prüfergebnis des zweiten Prüfungsschritts P2 vor, dass kein Kollisionsrisiko besteht, wird der dritte Schritt S3 der Fahrdynamiksteuerung durchgeführt. Die Lenkung 20 des landwirtschaftlichen Fahrzeugs 10 und der in Fig. 1 nicht gezeigte Antrieb des landwirtschaftlichen Fahrzeugs 10 werden zum Abfahren des vorausliegenden Abschnitts 6 in einem vierten Schritt S4 angesteuert. Bei dem Abfahren des vorausliegenden Abschnitts 6 in dem vierten Schritt S4 wird das landwirtschaftliche Fahrzeug 10 derart gelenkt und angetrieben, dass ein daraus resultierendes Kippmoment beim Befahren des vorausliegenden Abschnitts 6 das landwirtschaftliche Fahrzeug 10 nicht umkippen lässt.

### Bezugszeichen

- 2: landwirtschaftliche Nutzfläche
- 6: vorausliegender Abschnitt
- 7: Krümmung
- 10: landwirtschaftliches Fahrzeug
- 11: Fahrtrichtung
- 15: Pfad
- 16, 16': vorauseilende Entfernung
- 17: gepufferter Wegpunkt
- 18: eingelesener Wegpunkt
- 19: Fahrzeugkoordinatensystem
- 20: Lenkung
- 52: mobiles Endgerät
- 60: Steuereinrichtung
- 62: Endgerät-Fahrzeug-Schnittstelle
- 64: Ausgabeschnittstelle
- 70: Steuersystem
- H: Umfelderfassung
- P1: Fahrdynamikprüfung
- P2: Kollisionsprüfung
- S1: Abschnittsbestimmung
- S2: Informationskommunikation
- S3: Fahrdynamikansteuerung
- S4: Fahrt

## Patentansprüche

1. Verfahren zum Steuern eines landwirtschaftlichen Fahrzeugs (10) auf einer landwirtschaftlichen Nutzfläche (2), mit den Schritten:
- Bestimmen (S1) von einem in Fahrtrichtung (11) des landwirtschaftlichen Fahrzeugs (10) vorausliegenden Abschnitt (6) eines Pfads (15) zum Abfahren (S4) der landwirtschaftlichen Nutzfläche (2) bis zu einer vorauseilenden Entfernung (16) entlang des Pfads (15), wobei der Abschnitt (6) und die Entfernung (16) in Abhängigkeit von einer Fahrtgeschwindigkeit des landwirtschaftlichen Fahrzeugs (10) bestimmt werden,
- Kommunizieren (S2) von geometrischer Information zu dem bestimmten Abschnitt (6) des Pfads (15) von einem auf dem landwirtschaftlichen Fahrzeug (10) mitführbaren mobilen Endgerät (52) über eine Endgerät-Fahrzeug-Schnittstelle (62) an eine Steuereinrichtung (60) zum Steuern des landwirtschaftlichen Fahrzeugs (10) entlang des Pfads (15),
- Prüfen (P1), ob ein Abfahren (S4) des vorausliegenden Abschnitts (6) unter Berücksichtigung der kommunizierten geometrischen Information und der Fahrtgeschwindigkeit des landwirtschaftlichen Fahrzeugs (10) einen fahrdynamisches Einfluss auf die Fahrdynamik des landwirtschaftlichen Fahrzeugs (10) hat, welcher einen vordefinierten fahrdynamischen Grenzwert überschreitet, und
- Ansteuern (S3) von zumindest einer Fahrdynamikkomponente des landwirtschaftlichen Fahrzeugs (10) in Abhängigkeit von einem Prüfergebnis des Schritts des Prüfens (P1).

2. Verfahren nach Anspruch 1, wobei in dem Schritt des Bestimmens (S1) der vorausliegende Abschnitt (6) des Pfads (15) zudem ab einer weiteren vorauseilenden Entfernung (16') vom landwirtschaftlichen Fahrzeug (10) entlang des Pfads (15) bestimmt wird.

3. Verfahren nach Anspruch 1 oder 2, mit dem weiteren Schritt eines Kommunizierens von einem Fahrtgeschwindigkeitsverlauf entlang des bestimmten Abschnitts (6) des Pfads (15), wobei der Schritt des Prüfens (P1) zudem unter Berücksichtigung des kommunizierten Fahrtgeschwindigkeitsverlaufs durchgeführt wird.

4. Verfahren nach einem der vorhergehenden Ansprüche, mit dem weiteren Schritt eines Berechnens von einer Krümmungsinformation zu dem in Fahrtrichtung (11) des landwirtschaftlichen Fahrzeugs (10) vorausliegenden Abschnitts (6) des Pfads (15) basierend auf der kommunizierten geometrischen Information, wobei der Schritt des Prüfens (P1) ein Prüfen, ob das Abfahren (S4) des vorausliegenden Abschnitts (6) unter Berücksichtigung der berechneten Krümmungsinformation und einer Fahrtgeschwindigkeit des landwirtschaftlichen Fahrzeugs (10) entlang des vorausliegenden Abschnitts (6) den fahrdynamischen Einfluss hat, aufweist.

5. Verfahren nach einem der vorhergehenden Ansprüche, wobei der Schritt des Prüfens (P1) ein Prüfen, ob bei dem Abfahren (S4) des vorausliegenden Abschnitts (6) eine trägheitsinduzierte Kraft auf das landwirtschaftliche Fahrzeug (10) wirkt, welche eine vordefinierte Kraft überschreitet, aufweist.

6. Verfahren nach einem der vorhergehenden Ansprüche, mit den weiteren Schritten eines Erfassens (H) von einem Umfeld des landwirtschaftlichen Fahrzeugs (10) zum Erfassen von einem Hindernis entlang des in Fahrtrichtung (11) des landwirtschaftlichen Fahrzeugs (10) vorausliegenden Abschnitts (6) des Pfads (15) mit einer Umfelderfassungssensorik, und einem weiteren Prüfen (P2), wenn ein Hindernis erfasst worden ist, ob das Abfahren (S4) des vorausliegenden Abschnitts (6) unter Berücksichtigung von dem erfassten Hindernis ein Kollisionsrisiko zwischen dem landwirtschaftlichen Fahrzeug (10) und dem erfassten Hindernis aufweist.

7. Verfahren nach einem der vorhergehenden Ansprüche, wobei der Schritt des weiteren Prüfens (P2) ein Prüfen, ob bei dem Abfahren (S4) des vorausliegenden Abschnitts (6) eine ausreichende Reaktionszeit für ein Abbremsen des landwirtschaftlichen Fahrzeugs (10) vorliegt, aufweist.

8. Verfahren nach einem der vorhergehenden Ansprüche, mit dem weiteren Schritt eines Pufferns der kommunizierten geometrischen Information in einer Speichereinheit der Steuereinrichtung (60).

9. Steuersystem (70) mit einer Steuereinrichtung (60) und einem mobilen Endgerät (52) zum Durchführen der Schritte eines Verfahrens nach einem der vorhergehenden Ansprüche.

10. Landwirtschaftliches Fahrzeug (10) mit einem Steuersystem (70) nach Anspruch 9 zum Steuern des landwirtschaftlichen Fahrzeugs (10) auf einer landwirtschaftlichen Nutzfläche (2).

## Claims

1. Method for controlling an agricultural vehicle (10) on a piece of agricultural land (2), having the steps of:
- determining (S1) a section (6), which is ahead in the driving direction (11) of the agricultural vehicle (10), of a path (15) for driving over (S4) the piece of agricultural land (2) to a leading distance (16) along the path (15), wherein the section (6) and the distance (16) are determined on the basis of a driving speed of the agricultural vehicle (10),
- communicating (S2) geometrical information relating to the determined section (6) of the path (15) from a mobile terminal (52), which can be carried on the agricultural vehicle (10), via a terminal/vehicle interface (62), to a control device (60) for controlling the agricultural vehicle (10) along the path (15),
- checking (P1) whether driving over (S4) the section (6) ahead, taking into account the communicated geometrical information and the driving speed of the agricultural vehicle (10), has a driving dynamics influence, which exceeds a predefined driving dynamics limit value, on the driving dynamics of the agricultural vehicle (10), and
- actuating (S3) at least one driving dynamics component of the agricultural vehicle (10) on the basis of a checking result of the checking step (P1).

2. Method according to Claim 1, wherein, in the determining step (S1), that section (6) of the path (15) which is ahead is also determined as of a further leading distance (16') from the agricultural vehicle (10) along the path (15).

3. Method according to Claim 1 or 2, having the further step of communicating a driving speed profile along the determined section (6) of the path (15), wherein the checking step (P1) is also carried out taking into account the communicated driving speed profile.

4. Method according to one of the preceding claims, having the further step of calculating curvature information relating to that section (6) of the path (15) which is ahead in the driving direction (11) of the agricultural vehicle (10) on the basis of the communicated geometrical information, wherein the checking step (P1) comprises checking whether driving over (S4) the section (6) ahead has the driving dynamics influence, taking into account the calculated curvature information and a driving speed of the agricultural vehicle (10) along the section (6) ahead.

5. Method according to one of the preceding claims, wherein the checking step (P1) comprises checking whether an inertia-induced force, which exceeds a predefined force, acts on the agricultural vehicle (10) when driving over (S4) the section (6) ahead.

6. Method according to one of the preceding claims, having the further steps of capturing (H) an environment of the agricultural vehicle (10) in order to capture an obstacle along that section (6) of the path (15) which is ahead in the driving direction (11) of the agricultural vehicle (10) using an environment capture sensor system, and further checking (P2), if an obstacle has been captured, whether driving over (S4) the section (6) ahead, taking into account the captured obstacle, involves a risk of collision between the agricultural vehicle (10) and the captured obstacle.

7. Method according to one of the preceding claims, wherein the further checking step (P2) comprises checking whether there is a sufficient reaction time for braking the agricultural vehicle (10) when driving over (S4) the section (6) ahead.

8. Method according to one of the preceding claims, having the further step of buffering the communicated geometrical information in a storage unit of the control device (60).

9. Control system (70) having a control device (60) and a mobile terminal (52) for carrying out the steps of a method according to one of the preceding claims.

10. Agricultural vehicle (10) having a control system (70) according to Claim 9 for controlling the agricultural vehicle (10) on a piece of agricultural land (2).

## Revendications

1. Procédé de commande d'un véhicule agricole (10) sur une surface utile agricole (2), ledit procédé comprenant les étapes suivantes :
- déterminer (S1) une portion (6) d'un chemin (15) qui est située en avant dans le sens de marche (11) du véhicule agricole (10) et qu'il faut parcourir (S4) sur la surface utile agricole (2) jusqu'à une distance en avant (16) le long du chemin (15), la portion (6) et la distance (16) étant déterminées en fonction d'une vitesse de roulement du véhicule agricole (10),
- communiquer (S2) une information géométrique relative à la portion déterminée (6) du chemin (15) à l'aide d'un terminal mobile (52), pouvant être emporté sur le véhicule agricole (10), par le biais d'une interface terminal-véhicule (62) avec un module de commande (60) destiné à commander le véhicule agricole (10) le long du chemin (15),
- vérifier (P1) si le fait de parcourir (S4) la partie (6) située en avant, avec prise en compte de l'information géométrique communiquée et de la vitesse de roulement du véhicule agricole (10), a une influence en termes de dynamique de roulement sur la dynamique de roulement du véhicule agricole (10), qui dépasse la limite de dynamique de roulement prédéfinie, et
- activer (S3) au moins une composante de dynamique de roulement du véhicule agricole (10) en fonction d'un résultat de vérification de l'étape de vérification (P1).

2. Procédé selon la revendication 1,
à l'étape de détermination (SI), la portion en avant (6) du chemin (15) étant également déterminée à partir d'une autre distance en avant (16') par rapport au véhicule agricole (10) le long du chemin (15).

3. Procédé selon la revendication 1 ou 2, comprenant l'étape supplémentaire de communication d'un profil de vitesse de roulement le long de la portion déterminée (6) du chemin (15), l'étape de vérification (P1) étant également effectuée avec prise en compte du profil de vitesse de roulement communiqué.

4. Procédé selon l'une des revendications précédentes, comprenant l'étape supplémentaire de calcul d'une information de courbure relative à la partie (6) du chemin (15), située en avant dans le sens de roulement (11) du véhicule agricole (10), sur la base de l'information géométrique communiquée, l'étape de vérification (P1) comprenant la vérification que le fait de parcourir (S4) la portion en avant (6), avec prise en compte de l'information de courbure calculée et d'une vitesse de roulement du véhicule agricole (10) le long de la portion en avant (6), a une influence en termes de dynamique de roulement.

5. Procédé selon l'une des revendications précédentes, l'étape de vérification (P1) comprenant la vérification qu'une force induite par l'inertie, laquelle dépasse une force prédéfinie, agit sur le véhicule agricole (10) lors du parcours (S4) de la portion en avant (6).

6. Procédé selon l'une des revendications précédentes, comprenant les étapes supplémentaires de détection (H) d'une zone entourant le véhicule agricole (10) pour détecter un obstacle le long de la portion (6) du chemin (15), située en avant du véhicule agricole (10) dans le sens de roulement (11), à l'aide d'un système de capteurs de détection d'environnement, et de vérification supplémentaire (P2), lorsqu'un obstacle a été détecté, que le fait de parcourir (S4) la portion en avant (6), avec prise en compte de l'obstacle détecté, présente un risque de collision entre le véhicule agricole (10) et l'obstacle détecté.

7. Procédé selon l'une des revendications précédentes, l'étape de vérification supplémentaire (P2) comprenant la vérification qu'il y a un temps de réaction suffisant pour freiner le véhicule agricole (10) lors du parcours (S4) de la portion en avant (6).

8. Procédé selon l'une des revendications précédentes, comprenant l'étape supplémentaire de mise en mémoire tampon de l'information géométrique communiquée dans une unité de mémoire du module de commande (60).

9. Système de commande (70) comprenant un module de commande (60) et un terminal mobile (52) destinés à mettre en œuvre les étapes d'un procédé selon l'une des revendications précédentes.

10. Véhicule agricole (10) comprenant un système de commande (70) selon la revendication 9 destiné à commander le véhicule agricole (10) sur une surface utile agricole (2).
